# EUROPEAN PATENT SPECIFICATION

(11) **EP 2 670 956 B1**
(45) Date of publication and mention of the grant of the patent: **11.03.2015**
(21) Application number: 12705170.4
(22) Date of filing: 30.01.2012
(51) Int. Cl.: F02F 1/22, F02B 25/22, F02B 29/00, F02B 33/04, F01L 3/20, F02B 25/14, F02B 63/02, F01L 9/04, F02B 75/16, F02D 13/02, F02B 75/02

(54) **2-CYCLE ENGINE AND ENGINE-POWERED WORKING MACHINE HAVING THE SAME**
ZWEITAKTMOTOR UND MOTORGETRIEBENE ARBEITSMASCHINE DAMIT
MOTEUR À 2 CYCLES ET MACHINE DE TRAVAIL ALIMENTÉE PAR UN MOTEUR LE COMPORTANT

(30) Priority: 31.01.2011 JP 2011019155; 31.03.2011 JP 2011080871
(43) Date of publication of application: 11.12.2013
(73) Proprietor: Hitachi Koki Co., Ltd., Tokyo 108-6020 (JP)
(72) Inventor: NIWA, Kenji, Hitachinaka-shi Ibaraki 312-8502 (JP); IKEDA, Tomoya, Hitachinaka-shi Ibaraki 312-8502 (JP); ISHIDA, Shigetoshi, Hitachinaka-shi Ibaraki 312-8502 (JP)
(74) Representative: Popp, Eugen
(86) International application number: PCT/JP2012/000566
(87) International publication number: WO 2012/105216

(56) References cited:
- GB-A- 128 560
- GB-A- 139 473
- GB-A- 167 765
- GB-A- 220 007
- GB-A- 300 243
- GB-A- 2 290 349
- JP-A- 3 078 526
- JP-A- 6 010 867
- JP-A- 63 088 216
- US-A1- 2006 124 086

## Description

### Technical Field

The present invention relates to a 2-cycle engine, and more particularly relates to a 2-cycle engine suitable for a portable engine-powered working machine such as a weed cutter or a chain saw and to an engine-powered working machine having the same.

### Background Art

A 2-cycle engine provided with a governor device which prevents excessive rotation of an engine is known. For example, Patent Literature 1 describes a 2-cycle engine provided with a governor device which prevents excessive rotation of an engine by shutting off an air-fuel-mixture passage when the engine rotation number is increased to a predetermined rotation number or larger. More specifically, the governor device has a driver provided outside an insulator and a shutter provided inside the insulator. When the shutter is displaced by the driver, the amount of the air-fuel mixture that flows into a crank chamber through the air-fuel-mixture passage is reduced, and excessive rotation of the engine is prevented.

### Citation List

### Patent Literature

PTL 1: Patent H7-253033
PTL 2: Patent GB 128 560

### Summary of Invention

### Technical Problem

In the 2-cycle engine described in Patent Literature 1, when the rotation number of the engine is increased to the predetermined rotation number or larger, supply of air-fuel mixture is stopped by the governor device. Therefore, excessive rotation of the engine is prevented, and discharge of an uncombusted gas is also suppressed.

However, the governor device described in Patent Literature 1 has a large number of parts, the structure thereof is complex, and the size of the device is increased.

### Solution to Problem

An object of the present invention is to suppress at least either one of excessive rotation of an engine and discharge of uncombusted gas by a simple configuration having a small number of parts.

The following is a brief description of an outline of the typical means for solving the problem disclosed in the present application.

The 2-cycle engine according to an aspect of the present invention has: a piston reciprocably housed in a cylinder bore; an intake opening, an exhaust opening, and a scavenge opening provided in an inner peripheral wall of the cylinder bore and opened/closed by the piston; a scavenge passage connecting the scavenge opening and a crank chamber; and a valve that is provided on the scavenge passage and opens/ closes the scavenge passage.

### Advantageous Effects of Invention

According to one of embodiments, a 2-cycle engine in which excessive rotation of an engine is prevented, the fuel consumption rate is improved, and exhaust gas characteristics are improved by a simple structure and an engine-powered working machine having the same are realized.

### Brief Description of Drawings

The above feature and advantages of the present invention will be apparent from the following description of certain preferred embodiments taken in conjunction with the accompanying drawings, in which:
[fig.1]Fig. 1 is a lateral view of a weed cutter equipped with an engine according to a first embodiment.
[fig.2]Fig. 2 is an external view of the engine shown in Fig. 1.
[fig.3]Fig. 3 is a cross-sectional view of the engine shown in Fig. 1.
[fig.4]Fig. 4 is a control block diagram of the engine shown in Fig. 1.
[fig.5]Fig. 5 is a diagram showing the state of an intake opening, a scavenge opening, and an electromagnet with respect to a crank angle in the engine shown in Fig. 1.
[fig.6]Fig. 6 is a cross-sectional view of an engine according to a second embodiment.
[fig.7]Fig. 7 is another cross-sectional view of the engine according to the second embodiment.
[fig.8]Fig. 8 is a perspective view of a reed-valve suction member used in the engine shown in Fig. 6 and Fig. 7.

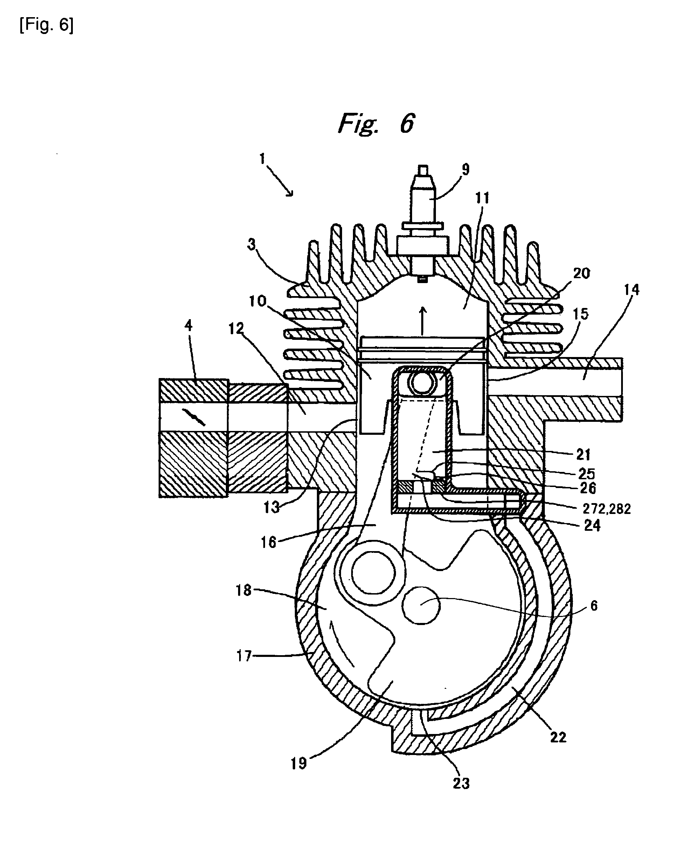

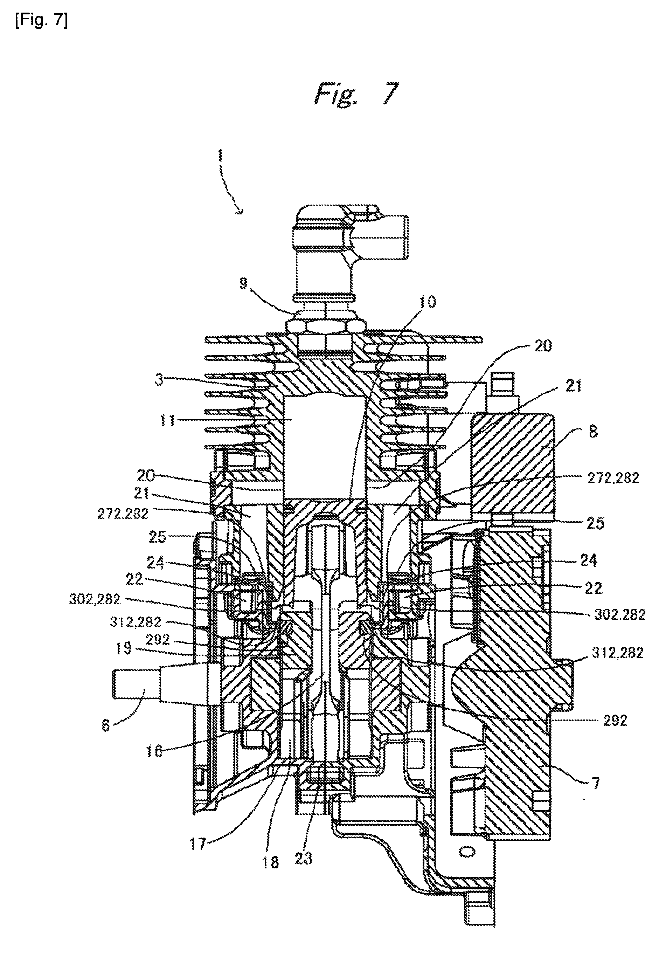

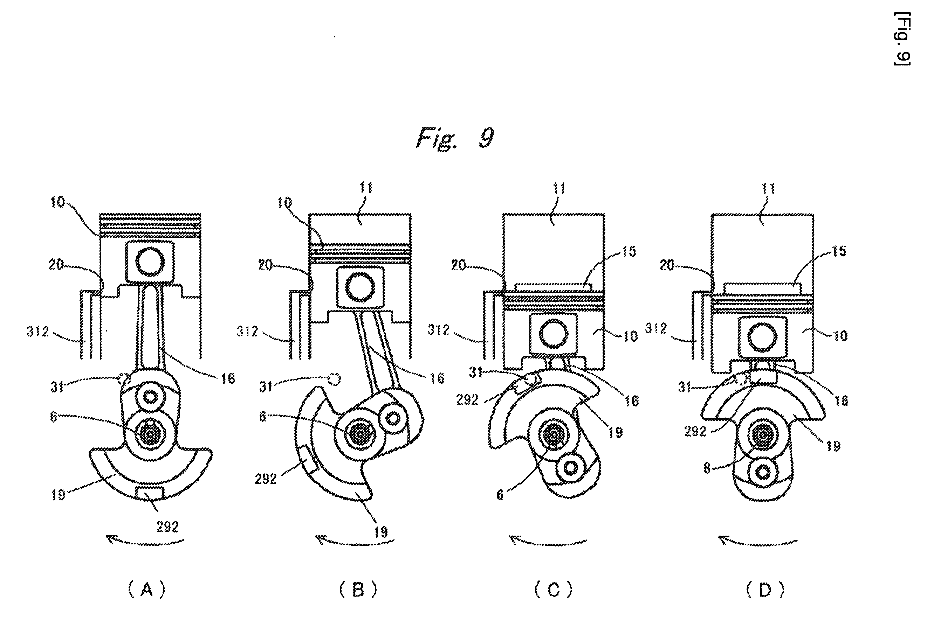

[fig.9]Fig. 9 shows pattern diagrams showing the positional relations between a permanent magnet and an end of a magnetic-force transmitting member in the engine shown in Fig. 6 and Fig. 7, in which Fig. 9 (A) is a pattern diagram showing the positional relation between the permanent magnet and the end of the magnetic-force transmitting member when a piston is at the top dead point, Fig. 9 (B) is a pattern diagram showing the positional relation between the permanent magnet and the end of the magnetic-force transmitting member when the piston is slightly moved from the top dead point toward the bottom dead point, Fig. 9 (C) is a pattern diagram showing the positional relation between the permanent magnet and the end of the magnetic-force transmitting member immediately before a scavenge opening is opened, and Fig. 9 (D) is a pattern diagram showing the positional relation between the permanent magnet and the end of the magnetic-force transmitting member when the piston is at the bottom dead point.
[fig.10]Fig. 10 is a diagram showing the cycle of the engine shown in Fig. 6 and Fig. 7.
[fig.11]Fig. 11 is a lateral view showing one of modification examples of the engine shown in Fig. 6 and Fig. 7.
[fig.12]Fig. 12 is a cross-sectional view of the engine shown in Fig. 11.
[fig.13]Fig. 13 is a perspective view of a reed-valve suction member used in an engine according to a third embodiment.

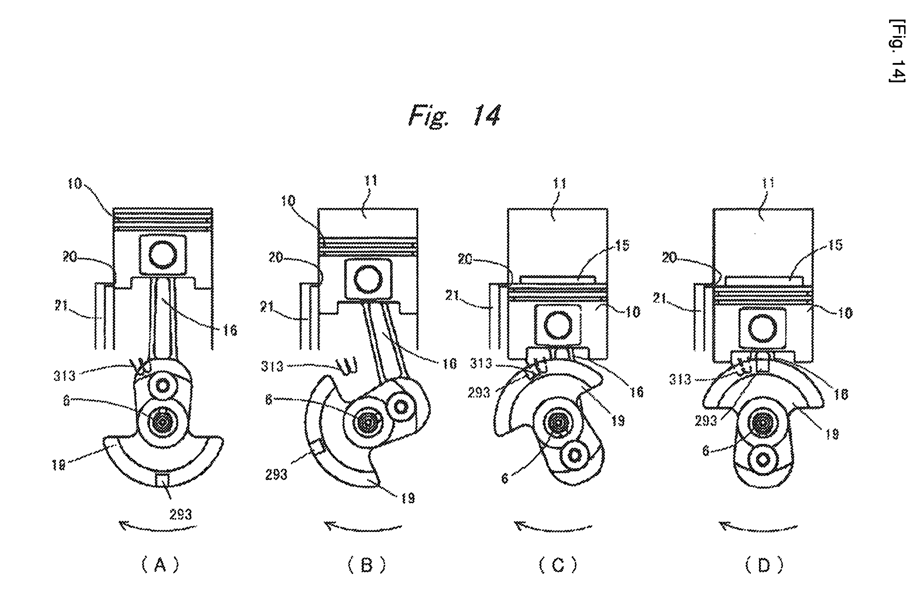

[fig.14]Fig. 14 shows pattern diagrams showing the positional relations between a permanent magnet and ends of a magnetic-force transmitting member in the engine according to the third embodiment, in which Fig. 14 (A) is a pattern diagram showing the positional relation between the permanent magnet and the ends of the magnetic-force transmitting member when a piston is at the top dead point, Fig. 14 (B) is a pattern diagram showing the positional relation between the permanent magnet and the ends of the magnetic-force transmitting member when the piston is slightly moved from the top dead point toward the bottom dead point, Fig. 14 (C) is a pattern diagram showing the positional relation between the permanent magnet and the ends of the magnetic-force transmitting member immediately before the scavenge opening is opened, and Fig. 14 (D) is a pattern diagram showing the positional relation between the permanent magnet and the ends of the magnetic-force transmitting member when the piston is at the bottom dead point.
[fig.15]Fig. 15 is a diagram showing the relation between the amplitude of the current that flows through the electric wires of the reed-valve suction member shown in Fig. 13 and time.
[fig.16]Fig. 16 is a cross-sectional view of an engine according to a fourth embodiment.

### Description of Embodiments

The invention will be now described herein with reference to illustrative embodiments. Those skilled in the art will recognize that many alternative embodiments can be accomplished using the teachings of the present invention and that the invention is not limited to the embodiments illustrated for explanatory purposes.

### (First Embodiment)

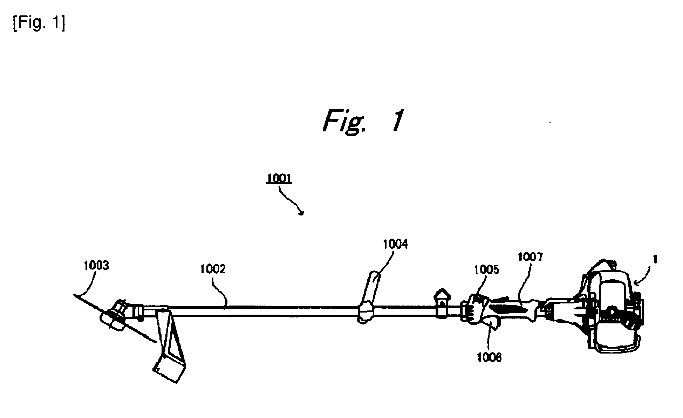

As shown in Fig. 1, a portable engine-powered working machine (weed cutter 1001) according to the present embodiment is provided with an operation rod 1002, a rotary blade 1003 attached to the distal end of the operation rod 1002, and a small 2-cycle engine (hereinafter, engine 1) attached to the rear end of the operation rod 1002. The output of the engine 1 is transmitted to the rotary blade 1003 via an unshown centrifugal clutch and drive shaft. The drive shaft is inserted through the operation rod 1002, and when the rotation number of an output shaft (not shown) of the engine 1 is equal to or larger than a predetermined rotation number, the centrifugal clutch transmits power to the drive shaft. An operator holds a loop handle 1004 and a grip part 1007 attached to the operation rod 1002 to operate the weed cutter 1001. In the grip part 1007, a stop switch 1005 and a throttle trigger 1006 are provided so as to surround the operation rod 1002.

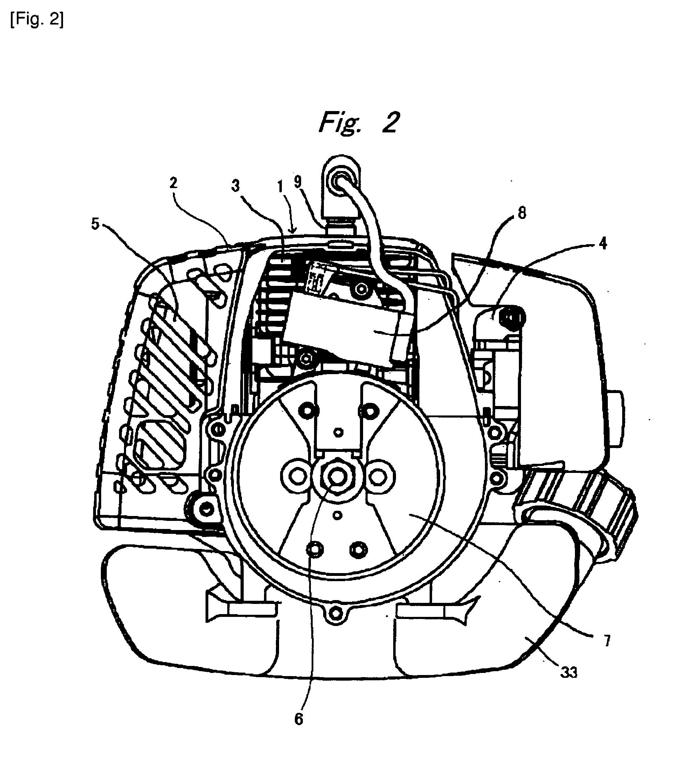

As shown in Fig. 2, the engine 1 is housed in an engine cover 2 and a carburetor 4, a muffler 5, a magnet rotor 7, an ignition coil 8, and a spark plug 9 are provided in the engine 1. The carburetor 4 mixes the fuel supplied from a fuel tank 33 and air and supplies the air-fuel mixture to a cylinder bore (not shown) formed in a cylinder block 3 of the engine 1. The muffler 5 discharges a combustion gas to the outside of the engine 1. The magnet rotor 7 is fixed to a crankshaft 6, the ignition coil 8 is fixed to the cylinder block 3, and the spark plug 9 is connected to the ignition coil 8.

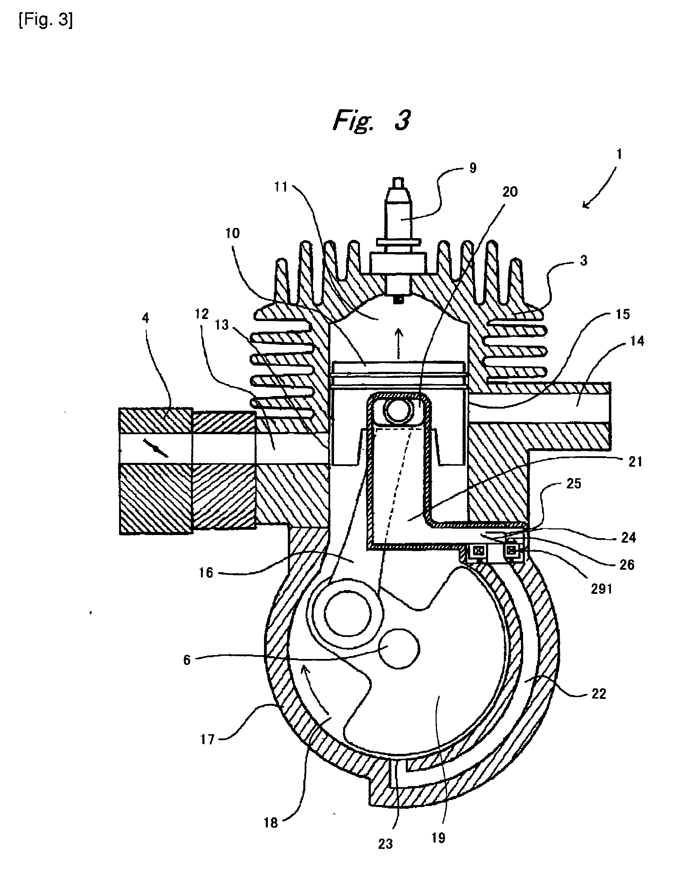

As shown in Fig. 3, the cylinder bore 11 is formed in the cylinder block 3 of the engine 1, and a piston 10, which is moved up and down, is housed in the cylinder bore 11. An intake opening 13 to which an intake passage 12 extending from the carburetor 4 is connected and an exhaust opening 15 to which an exhaust passage 14 extending toward the muffler (not shown) is connected are formed in the inner peripheral wall of the cylinder bore 11. The piston 10 housed in the cylinder bore 11 is connected to the crankshaft 6, to which a crank weight 19 rotatably supported in a crank chamber 18 is attached, via a con rod 16. Also, a pair of scavenge openings 20 (only one of them is shown) is formed in the inner peripheral wall of the cylinder bore 11 so as to be opposed to each other with the cylinder bore 11 interposed therebetween. Each of the intake opening 13, the exhaust opening 15, and the scavenge openings 20 is opened/ closed by the piston 10, which is moved up and down. Each of the scavenge openings 20 is connected to a scavenge passage (cylinder-block-side scavenge passage 21), which extends along the cylinder bore 11 toward the crank chamber 18 and is formed in the cylinder block 3. Further, the cylinder-block-side scavenge passage 21 is connected to one of the ends of a scavenge passage (crank-case-side scavenge passage 22) formed in a crank case 17. The other end of the crank-case-side scavenge passage 22 is connected to a crank-chamber-side scavenge opening (crank-chamber-side scavenge opening 23) communicated with the crank chamber 18. In other words, the cylinder-block-side scavenge passage 21 and the crank-case-side scavenge passage 22 form a scavenge passage connecting the scavenge opening 20 and the crank chamber 18 to each other.

At the connecting part of the cylinder-block-side scavenge passage 21 and the crank-case-side scavenge passage 22, a valve (reed valve 24 in the present embodiment), a stopper 25, and an electromagnet 291 are provided. Specifically, the reed valve 24 and the stopper 25 are fixed with a screw 26 to the electromagnet 291 disposed at the above-described connecting part. More specifically, the reed valve 24 is formed of a magnetic material, and one end of the reed valve 24 is fixed to the electromagnet 291 with the screw 26 so that the reed valve 24 is elastically deformable. Thus, one end of the reed valve 24 is a fixed end, and the other end of the reed valve 24 is a free end. The stopper 25 regulates the open degree of the reed valve 24. When the free end of the reed valve 24 is sucked by the electromagnet 291, the reed valve 24 closes the crank-case-side scavenge passage 22.

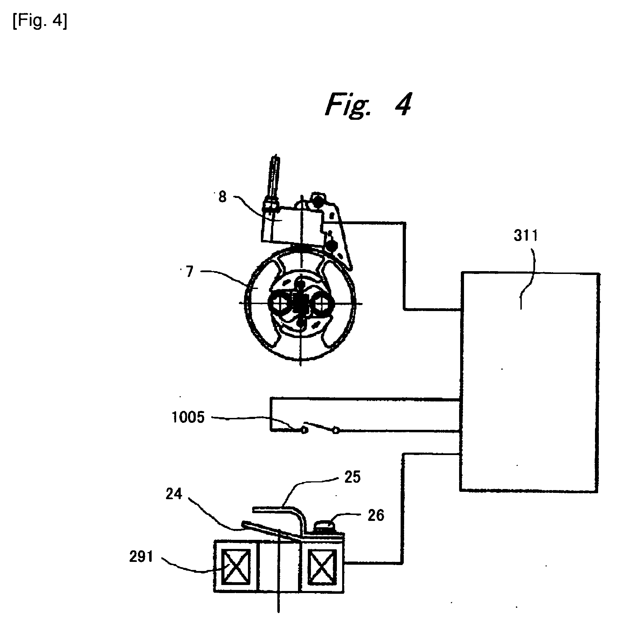

As shown in Fig. 4, the electromagnet 291, which sucks the reed valve 24, is connected to a control part (control device 311 in the present embodiment), and the control device 311 controls the power distribution to the electromagnet 291. Also, a first detection part (ignition coil 8 in the present embodiment) is connected to the control device 311. The ignition coil 8 outputs a pulse signal every time one point of the rotating magnet rotor 7 passes a predetermined position. In other words, a signal corresponding to the rotation number of engine is input to the control device 311. Furthermore, a second detection part (stop switch 1005 in the present embodiment) is connected to the control device 311, and a signal that indicates the operation state of the stop switch 1005 is input therefrom.

When the engine rotation number equal to or larger than a first predetermined value is detected based on the signal output from the ignition coil 8, the control device 311 distributes power to the electromagnet 291. Then, the free end of the reed valve 24 is sucked by the electromagnet 291. On the other hand, when the engine rotation number equal to or smaller than a second predetermined value is detected, the control device 311 stops the power distribution to the electromagnet 291. The first predetermined value is set to, for example, 12,000 rpm or larger, and the second predetermined value is set to, for example, 8,000 rpm or smaller.

Further, when the rotation number of the engine 1 is equal to or smaller than the second predetermined value, the control device 311 calculates the position of the piston 10 (position of the magnet rotor 7) and the rotation number of the engine 1 based on the signal output from the ignition coil 8 and determines the open/close timing (open/close state) of the scavenge opening 20. In this case, the control device 311 functions as a determination part which determines the open/close state of the scavenge opening 20.

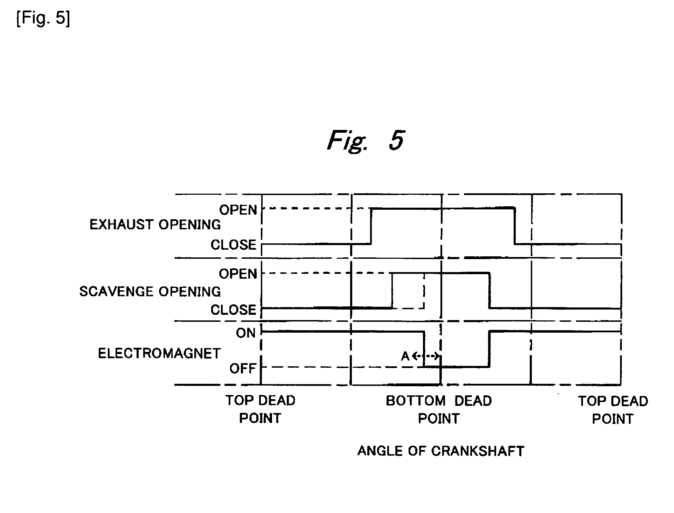

Then, as shown in Fig. 5, the control device 311 distributes power to the electromagnet 291 until a predetermined period elapses after the scavenge opening 20 is opened, in other words, during the anterior half of the period in which the scavenge opening 20 is opened. As a result, the reed valve 24 is sucked by the electromagnet 291 during the above-described predetermined period. Note that the length of the period during which power is distributed to the electromagnet 291 (length of the above-described predetermined period) may be adjusted in accordance with the rotation number of the engine 1. For example, the power distribution time may be extended when the engine rotation number is small, and the power distribution time may be shortened when the engine rotation number is large. In other words, the period shown by an arrow A in Fig. 5 may be shifted to the right side when the engine rotation number is small, and the period may be shifted to the left side when the engine rotation number is large. Further, a throttle switch (not shown), which detects the operation of the throttle trigger 1006 (not shown), may be connected to the control device 311. In this case, when the throttle switch is not being operated, the control device 311 determines that the engine 1 is in an idling state. Then, the control device 31 which has determined that the engine 1 is in the idling state distributes power to the electromagnet 291 until the predetermined period elapses after the scavenge opening 20 is opened, thereby causing the electromagnet 291 to suck the reed valve 24. Also, at a frequency of once per every two opens of the scavenge opening 20, the control device 311 may distribute power to the electromagnet 291 to maintain the state in which the reed valve 24 is sucked during the period when the scavenge opening 20 is opened. In this case, when the rotation number of the engine 1 is reduced to a third predetermined value or smaller during idling, the control device 311 stops the power distribution to the electromagnet 291 at the frequency of once per every two opens of the scavenge opening 20. The third predetermined value is set to, for example, 2,000 rpm or smaller.

According to the engine 1 configured in the above-described manner, when the rotation number of the engine 1 is excessively increased, power is distributed to the electromagnet 291 by the control device 311, and the reed valve 24 is sucked by the electromagnet 291. As a result, the crank-case-side scavenge passage 22 is closed. Therefore, even in the state in which the scavenge opening 20 is open, the air-fuel mixture in the crank chamber 18 does not flow from the crank-case-side scavenge passage 22 to the cylinder-block-side scavenge passage 21, and the air-fuel mixture does not flow from the scavenge opening 20 into the cylinder bore 11. As a result, the rotation number of the engine 1 is immediately reduced, and excessive rotation is effectively suppressed. Note that the above-described effect can be obtained even if the crank-case-side scavenge passage 22 is not completely closed. More specifically, the state in which the crank-case-side scavenge passage 22 is closed by the reed valve 24 includes not only the state in which the crank-case-side scavenge passage 22 is completely closed but also the state in which the crank-case-side scavenge passage 22 is almost completely closed. Also, the crank-case-side scavenge passage 22 is closed by the simple configuration made up of the electromagnet 291, the reed valve 24, and the stopper 25, and the configuration thereof is provided at the connecting part of the crank case 17 and the cylinder block 3. Therefore, assembly is facilitated, and manufacturing cost is suppressed also by virtue of the simple structure. Further, even when no power is distributed to the electromagnet 291, the reed valve 24 allows passage of only the airflow from the crank-case-side scavenge passage 22 to the cylinder-block-side scavenge passage 21. Therefore, the back-flow of the combustion gas to the crank chamber 18 can be effectively suppressed. Further, since the reed valve 24 is driven by the electromagnet 291, the power necessary for driving the reed valve 24 is extremely low.

Furthermore, while the engine 1 is normally operated, the control device 311 distributes power to the electromagnet 291 for a predetermined period. As a result, while power is distributed to the electromagnet 291, the reed valve 24 is sucked by the electromagnet 291, and the crank-case-side scavenge passage 22 is closed. Therefore, even in the state in which the scavenge opening 20 is open, the air-fuel mixture in the crank chamber 18 does not flow from the crank-case-side passage 22 to the cylinder-block-side scavenge passage 21. As a result, the combustion gas in the cylinder bore 11 can be caused to flow out from the exhaust opening 15 while suppressing the inflow of the air-fuel mixture from the scavenge opening 20 to the cylinder bore 11. Then, since power distribution to the electromagnet 291 is stopped after the predetermined period elapses, the air-fuel mixture in the crank chamber 18 flows to the cylinder-block-side scavenge passage 21 through the reed valve 24 from the crank-case-side scavenge passage 22 to flow into the cylinder bore 11 from the scavenge opening 20. Therefore, as shown in Fig. 5, the timing of opening the scavenge opening 20 can be practically delayed by closing the crank-case-side scavenge passage 22 until the predetermined period elapses after the exhaust opening 15 is opened. Accordingly, short path is effectively suppressed, and deterioration in exhaust gas characteristics caused by outflow of an uncombusted gas can also be effectively suppressed. Herein, the short path is a phenomenon in which the air-fuel mixture which has flowed from the scavenge opening 20 into the cylinder bore 11 flows out from the exhaust opening 15 by a shortest distance, and this is the phenomenon that is likely to occur when both of the openings of the exhaust opening 15 and the scavenge opening 20 start opening. Furthermore, since the period of power distribution to the electromagnet 291 can be set in accordance with the rotation number of the engine 1, the air-fuel mixture can be supplied to the cylinder bore 11 at optimum timing in accordance with the rotation number of the engine 1. Therefore, the short path can be effectively suppressed in accordance with the rotation number of the engine 1, and the deterioration in the exhaust gas characteristics can be more effectively suppressed.

Furthermore, even when the engine 1 is in an idling state, the control device 311 distributes power to the electromagnet 291 to suck the reed valve 24 until the predetermined period elapses after the scavenge opening 20 is opened. Therefore, the air-fuel mixture can be supplied to the cylinder bore 11 after the combustion gas in the cylinder bore 11 is discharged from the exhaust opening 15. More specifically, occurrence of intermittent combustion is suppressed because scavenging is completely carried out, and stable idling operation can be achieved. Moreover, during idling, in the period in which the scavenge opening 20 is open, power is distributed to the electromagnet 291 at the frequency of once per every two opens of the scavenge opening 20. Therefore, the number of times of combustion of the air-fuel mixture during idling is reduced, the amount of the exhaust gas is reduced, and exhaust gas characteristics are improved. In addition, fuel cost is reduced and noise is also reduced. Furthermore, since power distribution to the electromagnet 291 is stopped when the rotation number of the engine 1 is reduced during idling, the stop of the engine 1 is also prevented.

In the engine 1 according to the present embodiment, the crank-case-side scavenge passage 22 is formed in the crank case 17. However, the scavenge passage may be formed only in the cylinder block 3, and a reed valve which is opened and closed by magnet may be provided at this scavenge passage. Furthermore, instead of forming the reed valve 24 from a magnetic material, a separate magnetic body may be bonded to the reed valve 24. Alternatively, an electromagnet such as a coil may be attached to the reed valve 24, and a magnetic body may be provided at the scavenge passage.

### (Second Embodiment)

Next, a second embodiment of the engine-powered working machine will be described. The configuration of the engine-powered working machine according to the present embodiment is approximately the same as the configuration of the engine-powered working machine according to the first embodiment. Therefore, description of the configuration common to the engine-powered working machine according to the first embodiment will be omitted. Also, the same reference signs are assigned to the configuration common to the engine-powered working machine according to the first embodiment in the drawings.

Fig. 6 is a cross-sectional view of the engine 1 provided in the engine-powered working machine according to the present embodiment. As shown in Fig. 6, a reed-valve suction member 282 provided with a reed-valve opposing part 272 opposed to the reed valve 24 is provided at the connecting part of the crank-case-side scavenge passage 22 and the cylinder-block-side scavenge passage 21.

As shown in Fig. 7, the pair of cylinder-block-side scavenge passage 21 and the crank-case-side scavenge passage 22 are provided for each scavenge opening 20. In other words, the engine 1 is provided with the two cylinder-block-side scavenge passages 21 and the two crank-case-side scavenge passages 22. The two crank-case-side scavenge passages 22 are joined with each other at an unshown position and connected to the crank-chamber-side scavenge opening 23. Also, a permanent magnet 292 is embedded in the rotating surface of the crank weight 19 opposed to the inner wall of the crank chamber 18. On the other hand, an end 312 of a magnetic-force transmitting part 302 extending from the reed-valve opposing part 272 of the reed-valve suction member 282 is exposed from the wall surface of the crank chamber 18 that is opposed to the permanent magnet 292 embedded in the crank weight 19.

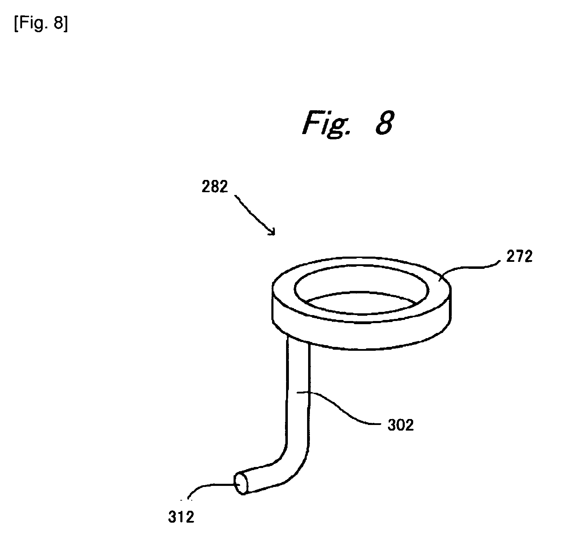

As shown in Fig. 8, the reed-valve opposing part 272 of the reed-valve suction member 282 is formed to have an annular shape so as to surround the cylinder-block-side scavenge passage 21. Also, the magnetic-force transmitting part 302 of the reed-valve suction member 282 is formed to have an approximately L-shape. Furthermore, one of the ends of the magnetic-force transmitting part 302 is connected to the reed-valve opposing part 272, and the other end 312 is exposed on the wall surface of the crank chamber 18. The reed-valve suction member 282 having the reed-valve opposing part 272 and the magnetic-force transmitting part 302 is made of a magnetic material such as soft iron or nickel or a composite material having magnetic property.

The width in a rotation direction and the disposition in the rotation direction of the permanent magnet 292 provided on the crank weight 19 and the end 312 (Fig. 8) of the magnetic-force transmitting part 302 are determined so that both of them are completely overlapped (Fig. 9C) immediately before the scavenge opening 20 is opened and that the overlapping of both of them is released (Fig. 9D) when the piston 10 reaches the bottom dead point.

In the engine 1 configured in the above-described manner, when the engine 1 is started, the piston 10 at the top dead point (Fig. 9A) moves down toward the bottom dead point (Fig. 9B). When the piston 10 moves down and the exhaust opening 15 starts opening (Fig. 9C), the permanent magnet 292 provided on the crank weight 19 starts overlapping with the end 312 of the magnetic-force transmitting part 302. Then, the reed-valve suction member 282 (magnetic-force transmitting part 302 and reed-valve opposing part 272) shown in Fig. 8 is inductively magnetized by the permanent magnet 292. As a result, the reed valve 24 (Fig. 7) is sucked by the reed-valve opposing part 272, and the crank-case-side scavenge passage 22 (Fig. 7) is closed. Then, the piston 10 further moves down, and the end 312 of the magnetic-force transmitting part 302 and the permanent magnet 292 are completely overlapped with each other (Fig. 9C) immediately before the scavenge opening 20 is opened. Therefore, the reed valve 24 is kept being sucked by the reed-valve opposing part 272 magnetized inductively, and the state in which the crank-case-side scavenge passage 22 (Fig. 7) is closed is maintained. When the piston 10 further moves down, the scavenge opening 20 is opened, while the overlapping area of the permanent magnet 292 and the end 312 of the magnetic-force transmitting part 302 is reduced. Thereafter, when the piston 10 reaches the bottom dead point, the overlapping of the permanent magnet 292 and the end 312 of the magnetic-force transmitting part 302 is released (Fig. 9D). As a result, the magnetic force of the reed-valve opposing part 272 is lost, and the suction of the reed valve 24 to the reed-valve opposing part 272 is released. More specifically, the reed-valve suction member 282 is a valve driving part which is inductively magnetized by the magnet.

The state in which the suction of the reed valve 24 by the reed-valve suction member 282 (reed-valve opposing part 272) is released is maintained until the piston 10 moves down again and the exhaust opening 15 (Fig. 6) starts opening. In the state in which the suction of the reed valve 24 to the reed-valve opposing part 272 is released, the reed valve 24 is opened when the pressure difference between the crank chamber 18 whose pressure is increased by the downward movement of the piston 10 and the cylinder bore 11 whose pressure is reduced by the downward movement of the piston 10 exceeds a predetermined value. As a result, the air-fuel mixture in the crank-case-side scavenge passage 22 flows into the cylinder bore 11 through the cylinder-block-side scavenge passage 21 and the scavenge opening 20. If the pressure difference between the crank chamber 18 and the cylinder bore 11 does not reach the predetermined value, the reed valve 24 does not open, and the state in which the crank-case-side scavenge passage 22 is closed is maintained.

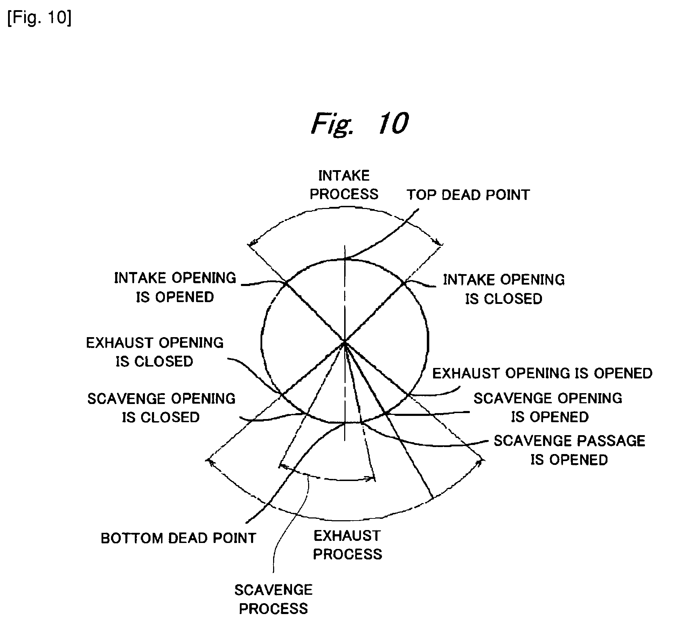

As described above, in the engine 1, as shown in Fig. 10, even after the piston 10 has moved down and the scavenge opening 20 is opened, the reed valve 24 is kept being sucked by the reed-valve opposing part 272 of the reed-valve suction member 282 for a certain period, and the crank-case-side scavenge passage 22 is kept being closed. Therefore, the inflow of the air-fuel mixture into the cylinder bore 11 can be avoided until the certain period elapses from the point immediately after the scavenge opening 20 is opened. In other words, start of the scavenging process can be delayed for a predetermined period from the point when the scavenge opening 20 is opened. Therefore, the outflow (blow through) of the uncombusted gas (air-fuel mixture) from the scavenge opening 20 to the exhaust opening 15 is effectively suppressed, the deterioration of the exhaust gas characteristics is effectively suppressed, and further the fuel consumption rate is improved. In addition, since the opening/closing timing of the intake opening 13 and the exhaust opening 15 is not changed, it is also possible to maintain the output of the engine 1. Furthermore, the means for closing the crank-case-side scavenge passage 22 at predetermined timing and for a predetermined period is realized by the simple configuration made up of the permanent magnet 292 which rotates together with the crankshaft 6 and the reed valve 24 which is driven by the reed-valve suction member 282. Therefore, high reliability and low manufacturing cost can be achieved because a complex control device is not required.

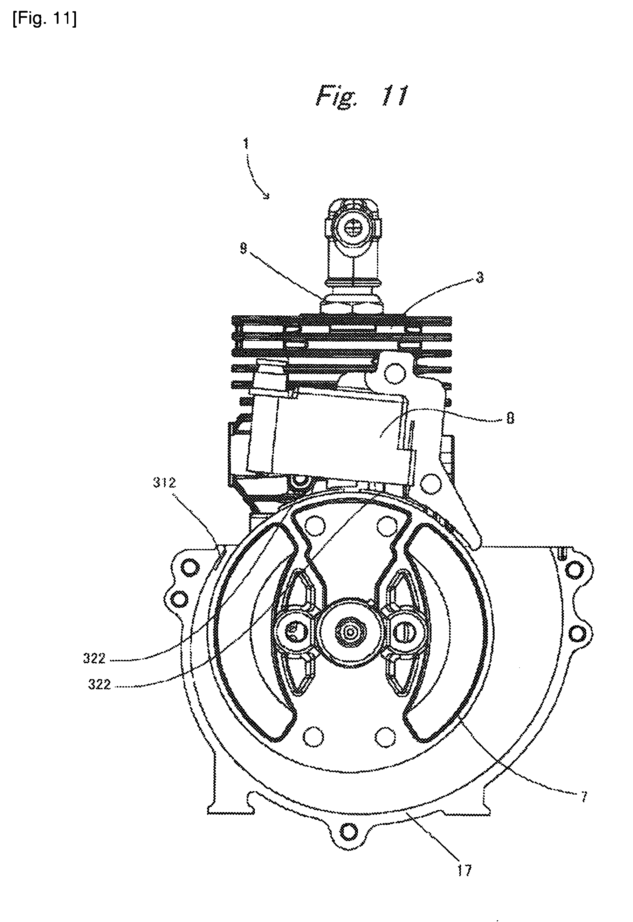

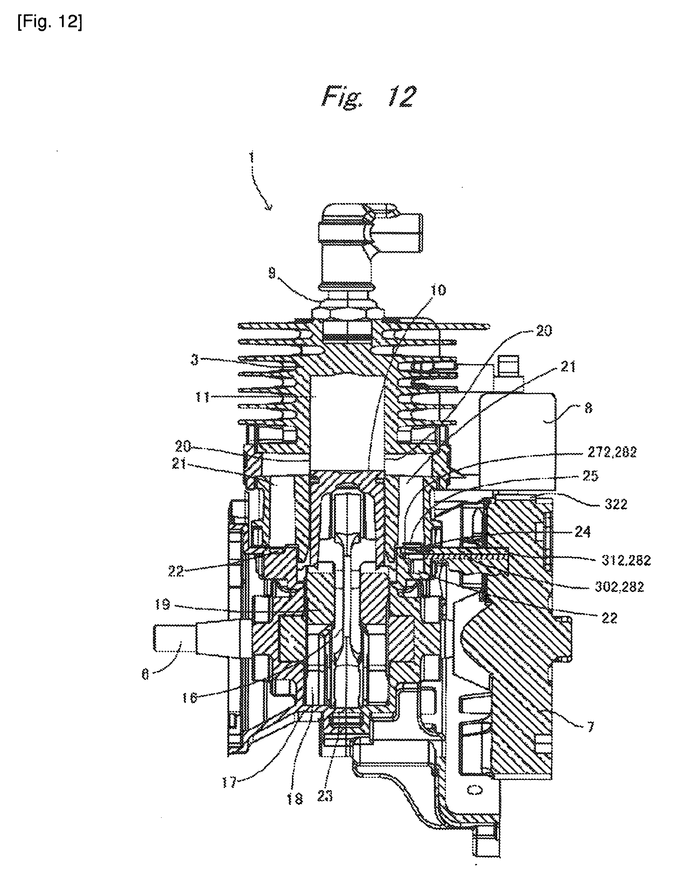

The permanent magnet 292 used for sucking the reed valve 24 is not limited to the permanent magnet which is embedded in the rotating surface of the crank weight 19. For example, the permanent magnet 292 may be provided on an arc-shaped peripheral surface. In this case, the end 312 of the magnetic-force transmitting part 302 of the reed-valve suction member 282 is provided at the position opposed to the permanent magnet 292 in the crank chamber 18 so that the timing at which the reed valve 24 is sucked by the reed-valve suction member 282 (the timing at which the crank-case-side scavenge passage 22 is closed) becomes predetermined timing. Also, the permanent magnet 292 may be provided on the magnet rotor 7 instead of the crank weight 19. Furthermore, as shown in Fig. 11, a permanent magnet 322 provided for driving the ignition coil 8 may be used for driving a reed valve (not shown). In this case, as shown in Fig. 11 and Fig. 12, the end 312 of the magnetic-force transmitting part 302 of the reed-valve suction member 282 is extended toward the outside of the crank case 17 to the position opposed to the permanent magnet 322 provided on the outer periphery of the magnet rotor 7. As a result, the crank-case-side scavenge passage 22 can be closed at predetermined timing by sucking the reed valve 24 by the reed-valve suction member 282, and the effects similar to those described above can be obtained. More specifically, the blow-through and deterioration of the exhaust gas characteristics can be effectively suppressed, and the fuel consumption rate can be also improved. Moreover, since the reed valve 24 is sucked by utilizing the permanent magnet 322 provided on the magnet rotor 7, it is not necessary to separately install a permanent magnet. In addition, compared with the case in which the reed-valve suction member 282 is provided in the crank case 17, the structure of the reed-valve suction member 282 is more simplified, the degree of freedom of the disposition of the end 312 of the magnetic-force transmitting part 302 is also improved, and assembly is also facilitated. Therefore, manufacturing cost can be further reduced. In the example shown in Fig. 12, unlike the engine 1 shown in Fig. 7, the reed valve 24 and the reed-valve suction member 282 are provided only on one side of the crank case 17. The crank-case-side scavenge passage 22 extends from the crank-chamber-side scavenge opening 23 toward the magnet rotor 7, passes through the reed valve 24 and the reed-valve suction member 282, and then branches into the crank-case-side scavenge passage 22 on the side that is close to the magnet rotor 7 and the crank-case-side scavenge passage 22 on the side that is away from the magnet rotor 7. When such a configuration is employed, since the structure of the magnetic-force transmitting part 302 of the reed-valve suction member 282 can be simplified and only one reed-valve suction member 282 is required to be disposed on one side of the crank case 17, manufacturing cost is reduced. Also in the engine 1 shown in Fig. 7, the reed valve 24 can be provided in the unbranched crank-case-side scavenge passage 22.

### (Third Embodiment)

Next, a third embodiment of the engine-powered working machine will be described. The configuration of the engine-powered working machine according to the present embodiment is approximately the same as the configuration of the engine-powered working machine according to the second embodiment. Therefore, description of the configuration common to the engine-powered working machine according to the second embodiment will be omitted. Also, the same reference signs are assigned to the configuration common to the engine-powered working machine according to the second embodiment in the drawings.

The valve driving part (reed-valve suction member 282) which sucks the reed valve 24 by induced magnetization is used in the second embodiment. On the other hand, in the present embodiment, a valve driving part (reed-valve suction member 283) which is magnetized by an induction current is used.

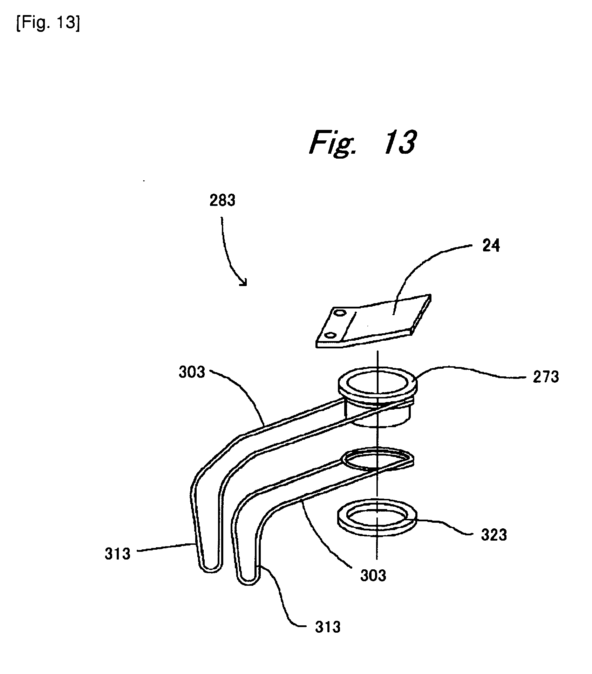

As shown in Fig. 13, the reed-valve suction member 283 is made up of a tubular reed-valve opposing part 273 made of soft iron or the like, a plurality of electric wires 303 wound around the tubular part of the reed-valve opposing part 273, and a fixing member 323, which fixes the wound electric wires 303 to the reed-valve opposing part 273. Part of each of the electric wires 303 is wound around the tubular part of the reed-valve opposing part 273, and the other part of each of the electric wires 303 extends toward the inside of the crank chamber (not shown) and forms a closed circuit. Fig. 14 will be referenced. Ends 313 of the electric wires 303 exposed in the crank chamber are disposed along the wall surface of the crank chamber so that, when the magnetic flux of a permanent magnet 293 is changed (moved) along with the rotation of the crankshaft 6, the magnetic flux perpendicularly passes across the ends 313. Also, the ends 313 of the respective electric wires 303 are disposed so as to be mutually shifted along the rotating direction of the permanent magnet 293. When the magnetic flux of the permanent magnet 293 passes across the ends 313 of the electric wires 303, the reed-valve opposing part 273 (Fig. 13) around which the electric wires 303 are wound acts as an electromagnet and sucks the reed valve 24 (Fig. 13). The number of the electric wires 303 and the disposing interval of the ends 313 are arbitrarily determined in accordance with the period during which the magnetic force generated in the reed-valve opposing part 273 is to be maintained.

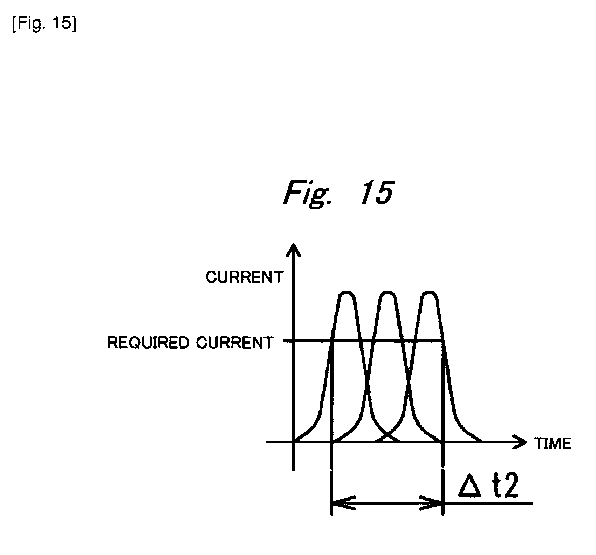

In the engine 1 configured in the above-described manner, when the engine 1 is started, the piston 10 (Fig. 14A) at the top dead point moves down toward the bottom dead point (Fig. 14B). When the piston 10 moves down and the exhaust opening 15 starts opening, the permanent magnet 293 provided on the crank weight 19 starts overlapping with the ends 313 of the electric wires 303, and the magnetic flux of the permanent magnet 293 passes across the ends 313 of the electric wires 303. As a result, as shown in Fig. 15, a current (induction current) which generates the magnetic force necessary for sucking the reed valve 24 flows through the electric wires 303, the reed valve 24 is sucked by the reed-valve opposing part 273, and the crank-case-side scavenge passage 22 is closed. When the piston 10 further moves down, the magnetic flux of the permanent magnet 293 passes across the ends 313 of the plurality of electric wires 303 one after another immediately before the scavenge opening 20 is opened (Fig. 14C). As a result, the magnetic force of the reed-valve opposing part 273 is maintained, the reed valve 24 is sucked by the reed-valve opposing part 273, and the crank-case-side scavenge passage 22 is kept being closed. Thereafter, when a predetermined period elapses after the scavenge opening 20 is opened, the magnetic flux of the permanent magnet 293 gets away from the ends 313 of the electric wires 303, and the magnetic force of the reed-valve opposing part 273 is lost (Fig. 14D). As a result, the suction of the reed valve 24 to the reed-valve opposing part 273 is released. As shown in Fig. 14D, at the point when the piston 10 reaches the bottom dead point, the ends 313 of the electric wires 303 are at the position where the magnetic flux of the permanent magnet 293 does not reach, and the magnetic force of the reed-valve opposing part 273 is completely lost. Then, the state in which the suction of the reed valve 24 to the reed-valve opposing part 273 is released is maintained until the piston 10 moves down again and the exhaust opening 15 starts opening.

Therefore, like the second embodiment, even when both of the scavenge opening 20 and the exhaust opening 15 are open, the inflow of the air-fuel mixture into the cylinder bore 11 can be avoided until a certain period elapses after the scavenge opening 20 is opened. Therefore, the outflow (blow through) of the uncombusted gas (air-fuel mixture) from the scavenge opening 20 to the exhaust opening 15 is effectively suppressed, the deterioration of the exhaust gas characteristics is effectively suppressed, and further the fuel consumption rate is improved. Also, since the opening/ closing timing of the intake opening 13 and the exhaust opening 15 is not changed, it is also possible to maintain the output of the engine 1. Furthermore, the means for closing the crank-case-side scavenge passage 22 at predetermined timing and for a predetermined period is realized by the simple configuration made up of the permanent magnet 293 which rotates together with the crankshaft 6 and the reed valve 24 which is driven by the reed-valve suction member 283. Therefore, high reliability and low manufacturing cost can be achieved because a complex control device is not required. Furthermore, the electric wires 303 can be easily disposed in the crank chamber, and the degree of freedom in terms of design about disposition and others is also high. In addition, the manufacturing cost can be further reduced by using the electric wires 303. Note that the permanent magnet 322 (Fig. 11) provided on the magnet rotor 7 may be used for driving the reed valve 24 instead of the permanent magnet 293 provided on the crank weight 19. In this case, the ends 313 of the electric wires 302 are extended so as to be opposed to the permanent magnet 322 of the magnet rotor 7 at a predetermined position.

### (Fourth Embodiment)

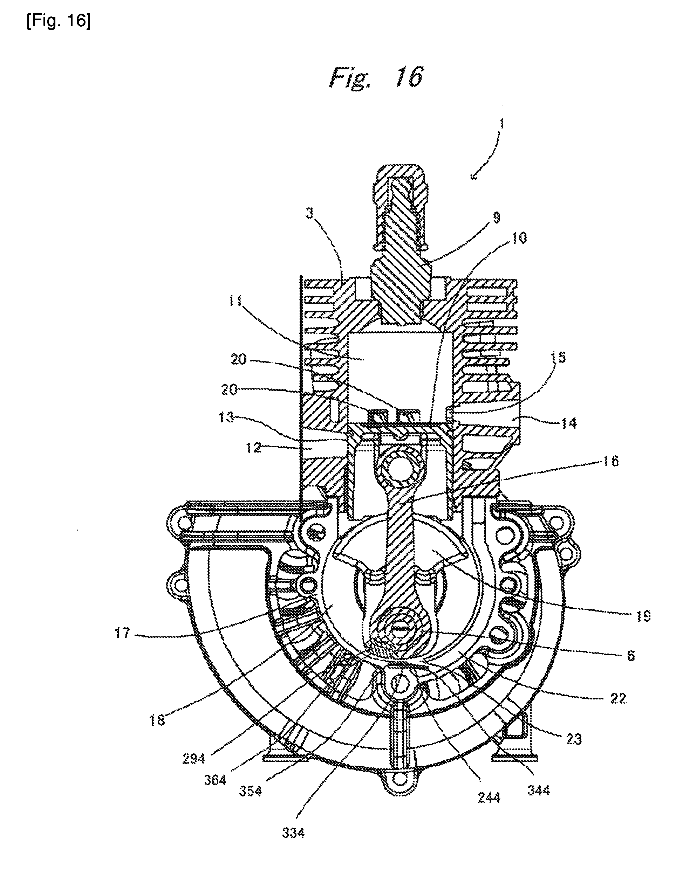

Next, a fourth embodiment of an engine-powered working machine will be described. In the second embodiment and the third embodiment, the reed valve 24 is provided at the connecting part of the cylinder-block-side scavenge passage 21 and the crank-case-side scavenge passage 22. On the other hand, in the present embodiment, a valve (in the present embodiment, a swing-type open/close valve 244) is provided at the connecting part of the crank-case-side scavenge passage 22 and the crank-chamber-side scavenge opening 23. Specifically, as shown in Fig. 16, the open/close valve 244 swingably supported by a shaft 334 is provided at the crank-chamber-side scavenge opening 23 of the crank chamber 18. In the open/close valve 244, an end 344 on the side of the crank-chamber-side scavenge opening 23 has the N-pole magnetism, and an end 354 on the side that is away from the crank-chamber-side scavenge opening 23 has the S-pole magnetism. A permanent magnet 294 is provided on the outer periphery of the crank weight 19 so that the magnet can be opposed to the open/close valve 244. A surface 364 of the permanent magnet 294 opposed to the open/close valve 244 has the S-pole magnetism.

In the engine 1 configured in the above-described manner, when the engine 1 is started and the crankshaft 6 rotates, for example, clockwise, the permanent magnet 294 provided on the crank weight 19, which rotates together with the crankshaft 6, also rotates in the same direction. Then, with respect to the open/close valve 244, the permanent magnet 294 is moved from the end 344 toward the end 354 of the open/ close valve 244. When the permanent magnet 294 approaches the end 344 of the open/ close valve 244, attraction force is generated between the surface 364 (S pole) of the permanent magnet 294 and the end 344 (N pole) of the open/close valve 244. Then, the open/close valve 244 rotates counterclockwise with using the shaft 334 as a rotation axis and closes the crank-chamber-side scavenge opening 23. Thereafter, when the permanent magnet 294 moves and approaches the end 354 of the open/close valve 244, repulsive force is generated between the surface 364 (S pole) of the permanent magnet 294 and the end 354 (S pole) of the open/close valve 244. As a result, the open/close valve 244, which closes the crank-chamber-side scavenge opening 23, is maintained as it is. In other words, the open/close valve 244 is the valve which is driven by the magnetic force of the permanent magnet 294 and opens/closes the crank-case-side scavenge passage 22.

Therefore, like the above-described second embodiment or third embodiment, the timing and period of closing the crank-chamber-side scavenge opening 23 by the open/ close valve 244 can be set by arbitrarily setting the position to dispose the permanent magnet 294 onto the crank weight 19 and the positions to dispose the crank-chamber-side scavenge opening 23 and the open/close valve 244. When the crank-chamber-side scavenge opening 23 is closed at predetermined timing and for a predetermined period, the effects similar to those of the second embodiment or the third embodiment can be obtained. Also, since the above-described effects can be obtained by the simple configuration that directly opens/closes the open/close valve 244 by the repulsive force and attraction force generated between the permanent magnet 294 and the open/close valve 244, the number of parts is further reduced, and cost is further reduced.

The present invention is not limited to the above-described embodiments, and various modifications and improvements can be made within the range described in claims. For example, the engine according to the present invention can be applied to a chain saw, a hedge trimmer, a concrete cutter, or the like other than a weed cutter. Also, the engine is not necessarily limited to that provided with the crank-case-side scavenge passage and the crank-chamber-side scavenge opening, but the engine may be provided only with the cylinder-block-side scavenge passage.

### Reference Signs List

- 1: 2-cycle engine (engine)
- 3: Cylinder block
- 6: Crankshaft
- 10: Piston
- 11: Cylinder bore
- 12: Intake passage
- 13: Intake opening
- 14: Exhaust passage
- 15: Exhaust opening
- 17: Crank case
- 18: Crank chamber
- 19: Crank weight
- 20: Scavenge opening
- 21: Cylinder-block-side scavenge passage (scavenge passage)
- 22: Crank-case-side scavenge passage (scavenge passage)
- 23: Crank-chamber-side scavenge opening
- 24: Reed valve (valve)
- 25: Stopper
- 244: Open/close valve (valve)
- 291: Electromagnet
- 311: Control device (control part)
- 272, 273: Reed-valve opposing part
- 282, 283: Reed-valve suction member (valve driving part)
- 292, 293, 294, 322: Permanent magnet (magnet)
- 302: Magnetic-force transmitting part
- 303: Electric wire
- 312: End of magnetic-force transmitting part
- 313: End of electric wire
- 344, 354: End of open/close valve

## Claims

1. A 2-cycle engine (1) comprising:
a piston (10) reciprocably housed in a cylinder bore (11);
an intake opening, an exhaust opening, and a scavenge opening provided in an inner peripheral wall of the cylinder bore and opened/closed by the piston; and
a scavenge passage (21, 22) connecting the scavenge opening (20) and a crank chamber,
**characterized in that**
a valve that opens/closes the scavenge passage is provided on the scavenge passage, said valve being able to prevent inflow of air-fuel mixture to the cylinder bore by closing the scavenge passage during a period in which the scavenge opening is open, said valve closes the scavenge passage at least when the scavenge opening (20) starts opening, further said valve opens the scavenge passage before the scavenge opening is closed again.

2. The 2-cycle engine according to claim 1, **characterized in that** the valve is driven by magnetic force.

3. The 2-cycle engine according to claim 1, comprising:
a control part that opens/closes the scavenge passage by controlling the valve in accordance with an engine rotation number.

4. The 2-cycle engine according to claim 3, comprising:
a detection part that outputs a signal in accordance with the engine rotation number, **characterized in that**
the control part (311) detects the engine rotation number based on the signal output from the detection part and controls the valve in accordance with the detected engine rotation number.

5. The 2-cycle engine according to claim 3, **characterized in that** the control part (311) controls the valve so that the scavenge passage is closed when the engine rotation number is equal to or larger than a first predetermined value.

6. The 2-cycle engine according to claim 3, **characterized in that** the control part (311) controls the valve so that the scavenge passage (21, 22) is closed until a predetermined period elapses from when the scavenge opening (20) is opened when the engine rotation number is equal to or smaller than a first predetermined value and equal to or larger than a second predetermined value.

7. The 2-cycle engine according to claim 6, **characterized in that** the control part changes the predetermined period in accordance with the engine rotation number.

8. The 2-cycle engine according to claim 3, comprising:
an electromagnet that generates magnetic force for driving the valve, **characterized in that**
the control part (311) controls the valve by controlling power distribution to the electromagnet.

9. The 2-cycle engine according to claim 1, comprising:
a crankshaft that is connected to the piston and rotates along with reciprocation of the piston; and
a magnet that rotates together with the crankshaft, **characterized in that** the valve is driven by magnetic force of the magnet and closes the scavenge passage when the magnet is at a predetermined position.

10. The 2-cycle engine according to claim 1, comprising:
a crankshaft that is connected to the piston and rotates along with reciprocation of the piston;
a magnet that rotates together with the crankshaft; and
a valve driving part that is inductively magnetized by the magnet when the magnet is at the predetermined position, **characterized in that**
the valve closes the scavenge passage when sucked by the valve driving part magnetized inductively.

11. The 2-cycle engine according to claim 1, comprising:
a crankshaft (6) that is connected to the piston and rotates along with reciprocation of the piston;
a magnet that rotates together with the crankshaft; and
a valve driving part (282, 283) that is magnetized by an induction current generated by change in magnetic flux caused by rotation of the magnet, **characterized in that**
the valve closes the scavenge passage when sucked by the magnetized valve driving part (282, 283).

12. An engine-powered working machine comprising the 2-cycle engine according to claim 1.

## Patentansprüche

1. Zweitaktmotor (1), welcher umfasst:
einen Kolben (10), welcher reziprok bewegbar in einer Zylinderbohrung (11) aufgenommen ist;
eine Einlassöffnung, eine Auslassöffnung und eine Rücklauföffnung, welche in einer Innenumfangswand von der Zylinderbohrung bereitgestellt sind und durch den Kolben geöffnet bzw. geschlossen werden; und
eine Rücklaufleitung (21, 22), welche die Rücklauföffnung (20) und eine Kurbelkammer verbindet,
**dadurch gekennzeichnet, dass**
ein Ventil, welches die Rücklaufleitung öffnet bzw. schließt, in der Rücklaufleitung bereitgestellt ist, wobei das Ventil dazu ausgebildet ist, ein Einströmen von einer Luft-Kraftstoff-Mischung in die Zylinderbohrung zu verhindern, indem die Rücklaufleitung innerhalb einer Zeitperiode geschlossen wird, innerhalb welcher die Rücklauföffnung geöffnet ist, wobei das Ventil die Rücklaufleitung wenigstens dann schließt, wenn die Rücklauföffnung (20) damit beginnt sich zu öffnen, und wobei das Ventil ferner die Rücklaufleitung öffnet, bevor die Rücklauföffnung abermals geschlossen wird.

2. Zweittaktmotor nach Anspruch 1, **dadurch gekennzeichnet, dass** das Ventil mittels Magnetkraft angetrieben wird.

3. Zweitaktmotor nach Anspruch 1, umfassend:
einen Steuerabschnitt, welcher die Rücklaufleitung öffnet bzw. schließt, indem das Ventil gemäß einer Motordrehzahl gesteuert wird.

4. Zweitaktmotor nach Anspruch 3, umfassend:
einen Erfassungsabschnitt, welcher ein Signal in Ansprechen auf die Motordrehzahl ausgibt, **dadurch gekennzeichnet, dass**
der Steuerabschnitt (311) die Motordrehzahl basierend auf dem vom Erfassungsabschnitt ausgegebenen Signal erfasst und das Ventil in Ansprechen auf die erfasste Motordrehzahl steuert.

5. Zweitaktmotor nach Anspruch 3, **dadurch gekennzeichnet, dass**
der Steuerabschnitt (311) das Ventil derart steuert, dass die Rücklaufleitung geschlossen wird, sobald die Motordrehzahl gleich oder größer als ein erster vorbestimmter Wert ist.

6. Zweitaktmotor nach Anspruch 3, **dadurch gekennzeichnet, dass**
der Steuerabschnitt (311) das Ventil derart steuert, dass die Rücklaufleitung (21, 22) geschlossen wird, bis eine vorbestimmte Zeitperiode von dem Zeitpunkt an verstrichen ist, an welchem die Rücklauföffnung (20) geöffnet ist, wenn die Motordrehzahl gleich oder kleiner als ein erster vorbestimmter Wert ist und gleich oder größer als ein zweiter vorbestimmter Wert ist.

7. Zweitaktmotor nach Anspruch 6, **dadurch gekennzeichnet, dass**
der Steuerabschnitt die vorbestimmte Zeitperiode gemäß der Motordrehzahl ändert.

8. Zweitaktmotor nach Anspruch 3, umfassend:
einen Elektromagneten, welcher eine Magnetkraft zum Antreiben des Ventils erzeugt, **dadurch gekennzeichnet, dass**
der Steuerabschnitt (311) das Ventil steuert, indem eine Leistungszufuhr an den Elektromagneten gesteuert wird.

9. Zweitaktmotor nach Anspruch 1, umfassend:
eine Kurbelwelle, welche mit dem Kolben verbunden ist und sich zusammen mit der reziproken Bewegung des Kolbens umdreht; und
einen Magneten, welcher sich zusammen mit der Kurbelwelle umdreht, **dadurch gekennzeichnet, dass**
das Ventil durch die Magnetkraft von dem Magneten angetrieben wird und die Rücklaufleitung verschließt, wenn sich der Magnet an einer vorbestimmten Position befindet.

10. Zweitaktmotor nach Anspruch 1, umfassend:
eine Kurbelwelle, welche mit dem Kolben verbunden ist und sich zusammen mit der reziproken Bewegung des Kolbens umdreht;
einen Magneten, welcher sich zusammen mit der Kurbelwelle umdreht; und
einen Ventil-Antriebsabschnitt, welcher induktiv durch den Magneten magnetisiert wird, wenn sich der Magnet an der vorbestimmten Position befindet, **dadurch gekennzeichnet, dass**
das Ventil die Rücklaufleitung beim Ansaugen durch den Ventil-Antriebsabschnitt, welcher induktiv magnetisiert ist, verschließt.

11. Zweitaktmotor nach Anspruch 1, umfassend:
eine Kurbelwelle (6), welche mit dem Kolben verbunden ist und sich zusammen mit der reziproken Bewegung des Kolbens umdreht;
einen Magneten, welcher sich zusammen mit der Kurbelwelle umdreht; und
einen Ventil-Antriebsabschnitt (282, 283), welcher durch einen Induktionsstrom magnetisiert wird, welcher durch eine Änderung des Magnetflusses, hervorgerufen durch die Umdrehung des Magneten, erzeugt wird, **dadurch gekennzeichnet, dass**
das Ventil die Rücklaufleitung beim Ansaugen durch den magnetisierten VentilAntriebsabschnitt (282, 283) verschließt.

12. Motorbetriebene Arbeitsmaschine, welche den Zweitaktmotor nach Anspruch 1 umfasst.

## Revendications

1. Moteur à combustion interne à deux temps (1) comprenant :
un piston (10) logé en va et vient dans un alésage de cylindre (11) ;
une ouverture d'admission, une ouverture d'échappement, et une ouverture de récupération prévues dans une paroi périphérique interne de l'alésage de cylindre et ouvertes/fermées par le piston ; et
un passage de récupération (21, 22) reliant l'ouverture de récupération (20) et une chambre de vilebrequin,
**caractérisé en ce que**
une soupape qui ouvre/ferme le passage de récupération est prévue sur le passage de récupération, ladite soupape étant capable d'empêcher un écoulement d'entrée de mélange air/carburant vers l'alésage de cylindre en fermant le passage de récupération pendant une période pendant laquelle l'ouverture de récupération est ouverte, ladite soupape ferme le passage de récupération au moins lorsque l'ouverture de récupération (20) commence à s'ouvrir, en outre ladite soupape ouvre le passage de récupération avant que l'ouverture de récupération soit de nouveau fermée.

2. Moteur à combustion interne à deux temps selon la revendication 1, **caractérisé en ce que**
la soupape est entraînée par une force magnétique.

3. Moteur à combustion interne à deux temps selon la revendication 1, comprenant :
une partie de commande qui ouvre/ferme le passage de récupération en commandant la soupape en fonction d'un nombre de tours du moteur à combustion interne.

4. Moteur à combustion interne à deux temps selon la revendication 3, comprenant :
une partie de détection qui délivre un signal en fonction du nombre de tours du moteur à combustion interne, **caractérisé en ce que**
la partie de commande (311) détecte le nombre de tours du moteur à combustion interne sur la base du signal délivré par la partie de détection et commande la soupape en fonction du nombre de tours détecté du moteur à combustion interne.

5. Moteur à combustion interne à deux temps selon la revendication 3, **caractérisé en ce que**
la partie de commande (311) commande la soupape de sorte que le passage de récupération soit fermé lorsque le nombre de tours du moteur à combustion interne est supérieur ou égal à une première valeur prédéterminée.

6. Moteur à combustion interne à deux temps selon la revendication 3, **caractérisé en ce que**
la partie de commande (311) commande la soupape de sorte que le passage de récupération (21, 22) soit fermé jusqu'à ce qu'une période prédéterminée se soit écoulée depuis l'instant auquel l'ouverture de récupération (20) a été ouverte lorsque le nombre de tours du moteur à combustion interne est inférieur ou égal à une première valeur prédéterminée et supérieur ou égal à une deuxième valeur prédéterminée.

7. Moteur à combustion interne à deux temps selon la revendication 6, **caractérisé en ce que**
la partie de commande modifie la période prédéterminée en fonction du nombre de tours du moteur à combustion interne.

8. Moteur à combustion interne à deux temps selon la revendication 3, comprenant :
un électroaimant qui génère une force magnétique pour entraîner la soupape, **caractérisé en ce que**
la partie de commande (311) commande la soupape en commandant la distribution de puissance à l'électroaimant.

9. Moteur à combustion interne à deux temps selon la revendication 1, comprenant:
un vilebrequin qui est relié au piston et qui tourne avec le mouvement de va-et-vient du piston ; et
un aimant qui tourne avec le vilebrequin, **caractérisé en ce que**
la soupape est entraînée par la force magnétique de l'aimant et ferme le passage de récupération lorsque l'aimant est à une position prédéterminée.

10. Moteur à combustion interne à deux temps selon la revendication 1, comprenant :
un vilebrequin qui est relié au piston et qui tourne avec le mouvement de va-et-vient du piston ;
un aimant qui tourne avec le vilebrequin ; et
une partie d'entraînement de soupape qui est magnétisée de manière inductive par l'aimant lorsque l'aimant est à la position prédéterminée, **caractérisé en ce que**
la soupape ferme le passage de récupération lorsqu'elle est aspirée par la partie d'entraînement de soupape magnétisée de manière inductive.

11. Moteur à combustion interne à deux temps selon la revendication 1, comprenant :
un vilebrequin (6) qui est relié au piston et qui tourne avec le mouvement de va-et-vient du piston ;
un aimant qui tourne avec le vilebrequin ; et
une partie d'entraînement de soupape (282, 283) qui est magnétisée par un courant d'induction généré par un changement du flux magnétique provoqué par la rotation de l'aimant, **caractérisé en ce que**
la soupape ferme le passage de récupération lorsqu'elle est aspirée par la partie d'entraînement de soupape (282, 283) magnétisée.

12. Machine d'usinage entraînée par un moteur à combustion interne comprenant le moteur à combustion interne à deux temps selon la revendication 1.
